Europäisches Patentamt

European Patent Office

Office européen des brevets

(19)

(11) Numéro de publication : **0 499 558 A1**

(12) # DEMANDE DE BREVET EUROPEEN

(21) Numéro de dépôt : **92440023.7**

(22) Date de dépôt : **14.02.92**

(51) Int. Cl.$^5$ : **G02B 27/00**

(30) Priorité : **15.02.91 FR 9101991**

(43) Date de publication de la demande :
**19.08.92 Bulletin 92/34**

(84) Etats contractants désignés :
**AT BE CH DE DK ES GB GR IT LI LU NL SE**

(71) Demandeur : **X-IAL**
**Les Algorithmes, Parc d'Innovation**
**F-67400 Illkirch-Graffenstaden (FR)**
(71) Demandeur : **SOCIETE NATIONALE DES CHEMINS DE FER FRANCAIS**
**88, rue Saint-Lazare**
**F-75436 Paris Cedex 09 (FR)**

(72) Inventeur : **Liegeois, Christian**
**14 rue de l'Observatoire**
**F-67000 Strasbourg (FR)**
Inventeur : **Gazet, André**
**42 rue Marie Pia**
**F-91480 Quincy sous Senart (FR)**
Inventeur : **Wehrli, Didier**
**4 rue du ler Décembre**
**F-67230 Benfeld (FR)**
Inventeur : **Le Doare, Sylvain**
**14 rue de l'Aubépine**
**F-78700 Conflans Ste Honorine (FR)**

(74) Mandataire : **Metz, Paul**
**Cabinet METZ PATNI 63, rue de la Ganzau**
**F-67100 Strasbourg (FR)**

(54) **Ensemble de visualisation d'informations de route pour le poste de conduite d'un véhicule ferroviaire.**

(57)   Ensemble de visualisation d'informations pour le poste de conduite d'un véhicule ferroviaire.

Ensemble de visualisation caractérisé d'une part en ce que les informations sont des informations visuelles variables provenant à la fois de l'environnement du véhicule, du véhicule ou du convoi lui-même, et d'un poste de régulation central, et d'autre part en ce qu'il comporte :

. une étape de transformation des informations reçues en information graphique,

. une étape de formation de l'information graphique à une distance correspondant à la profondeur du champ désirée imposée par l'environnement.

Cette invention intéresse les industries en rapport avec l'holographie et l'informatique.

FIG.1

La présente invention concerne un procédé de formation d'informations visuelles variables pour l'agent de conduite d'un véhicule ferroviaire et les moyens destinés à le mettre en oeuvre.

Par souci de simplification et dans la suite du texte, il faut entendre par le terme véhicule ferroviaire toutes les motrices de chemin de fer, de métro, de tramway et autres moyens de transport de personnes ou de marchandises dont la trajectoire est guidée par l'intermédiaire d'une suite de rails et dont la circulation est, par exemple, gérée par des signaux disposés le long des voies et/ou gérée par un poste de régulation.

Le machiniste ou l'agent responsable de la conduite d'un véhicule ferroviaire assure la marche de son convoi à partir de plusieurs types d'informations provenant :
- de la signalisation latérale le long des voies,
- des ordres et conseils qu'il reçoit du régulateur,
- des alarmes qui l'informent visuellement ou auditivement des dysfonctionnements de son convoi ou des incidents survenant en cours de conduite ou au niveau du fonctionnement de l'engin moteur,
- des éléments de conduite du convoi.

La signalisation latérale est un système apportant un ensemble d'informations transmises visuellement aux agents de conduite qui s'en approchent, par exemple des optiques de couleurs montées sur des potences installées le long de la voie ferrée.

Le régulateur est un agent sédentaire ou un système automatique qui a une vision globale du trafic et transmet, par exemple par radio, des ordres et conseils de conduite à chacun des agents de conduite se trouvant dans son secteur de régulation.

Les alarmes sont censées informer au plus tôt l'agent de conduite de tout incident ou dysfonctionnement risquant d'altérer l'intégrté du convoi ou la sécurité des personnes ou des marchandises transportées.

Les éléments de conduite, tels que vitesse, pression, etc..., sont reportés à partir des appareils de mesure sur la planche de bord du véhicule.

De plus, un système automatique de conduite, suivi et contrôlé par un système interactif d'envoi et d'émission de données peut compléter, doubler ou remplacer l'ensemble des informations énumérées précédemment et, de plus, agir directement sur le véhicule ferroviaire. C'est le cas par exemple d'un freinage d'urgence.

Un premier but de l'invention est de permettre, selon des critères hiérarchisés de simultanéité, de priorité ou d'urgence, la transmission :
- d'ordres,
- de conseils,
- d'alarmes,
- d'éléments de conduite,
à l'agent de conduite placé aux commandes du convoi ferroviaire.

Un autre but de l'invention est d'assurer une continuité de la transmission des ordres, des conseils, des alarmes et des éléments de conduite sans perturber ni distraire l'agent de conduite qui doit, en permanence, consacrer toute son attention sur l'environnement extérieur.

Un autre but encore de l'invention est de créer une présentation ergonomique des ordres, des conseils, des alarmes et des conditions de conduite selon une organisation s'appuyant sur l'ordonnancement souhaité de ses actions.

Pour atteindre ces différents buts simultanément, on ne connaît à l'heure actuelle aucun système unique totalement intégré dans la cabine de conduite.

D'autre part, en vue de l'application au domaine ferroviaire, il a fallu répondre à des problèmes spécifiques, notamment :
- des contraintes mécaniques liées à l'environnement (vibration, résistance aux chocs),
- des contraintes thermiques (utilisation en gamme de température étendue),
- des difficultés logiques pour la transformation d'un signal binaire en information graphique,
- des difficultés optiques : par exemple la visualisation sous forme d'image à une distance de plusieurs mètres, selon un agrandissement donné et un positionnement convenant aux différentes tailles des agents de conduite.

L'invention comporte au moins en combinaison les éléments et caractéristiques qui suivent :
- un dispositif de réception des informations (ordres, conseils, alarmes ...) et de leur gestion selon une organisation s'appuyant sur leur ordonnancement souhaité ;
- un dispositif de transformation de ces informations en une présentation ergonomique visuelle ;
- un dispositif optique de mise en forme et de transmission de la présentation ergonomique visuelle dans le champ visuel principal de l'agent de conduite, par exemple collimaté à une distance correspondant à la profondeur de champ désirée ou imposée par l'environnement.

Les principaux avantages de l'invention sont repris non limitativement ci-après :
- présentation attrayante et complète de l'ensemble de l'information,
- adaptabilité de la visualisation à la taille des agents de conduite,
- modification à volonté de la symbologie utilisée,
- possibilité d'adaptation à la communication d'autres messages d'information,
- utilisation d'autres capteurs des éléments de conduite,
- sécurité et confort de visualisation optimaux.

On comprendra mieux l'invention à l'aide de la description ci-après effectuée en référence aux figures annexées suivantes dans lesquelles :

– la figure 1 est une vue schématique d'ensemble de l'agent de conduite et du système de visualisation encabine, disposé par exemple sous la planche de bord du véhicule ferroviaire ;

– la figure 2 est un schéma d'ensemble du système de visualisation ;

– la figure 3 est un schéma représentant un exemple de présentation d'informations dans un cadre circulaire ;

– la figure 4 est un schéma représentant un exemple de présentation d'informations dans un cadre rectangulaire.

L'idée générale inventive consiste à traduire toutes les informations, qu'elles soient internes ou externes, à l'aide d'un système de gestion unique 1 situé en amont, de les transférer au niveau d'un système optique de visualisation 2, puis de les afficher sur un même support d'informations 3 à l'aide d'une symbologie cohérente et ergonomique selon l'ordonnancement souhaité et de les projeter dans le champ de vision du conducteur.

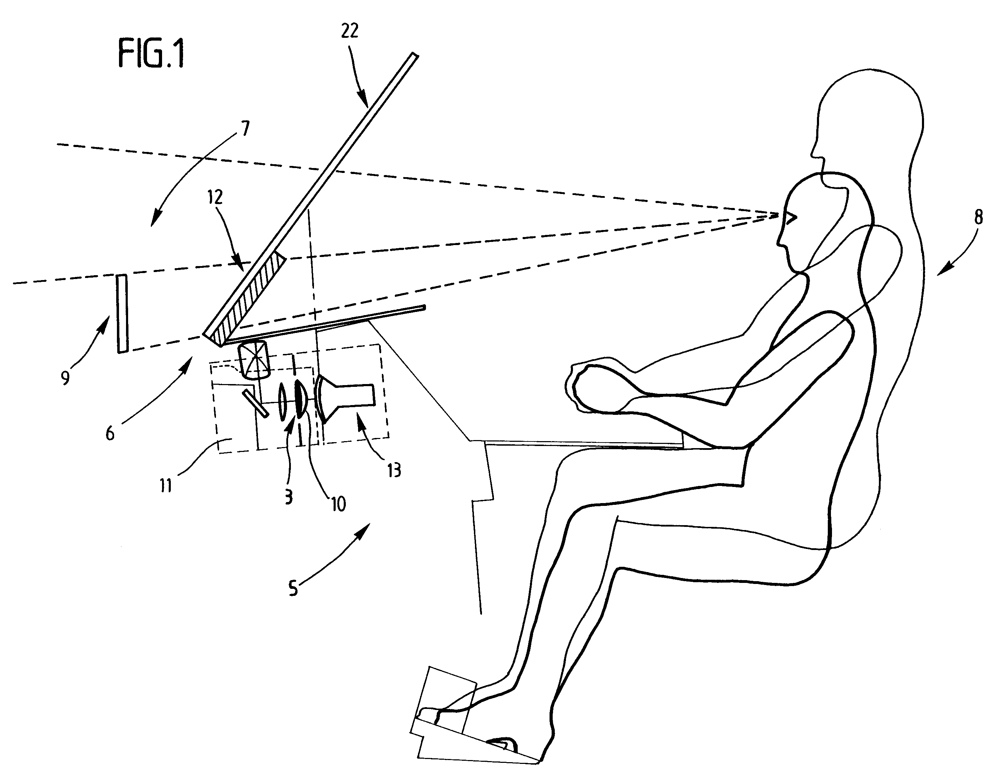

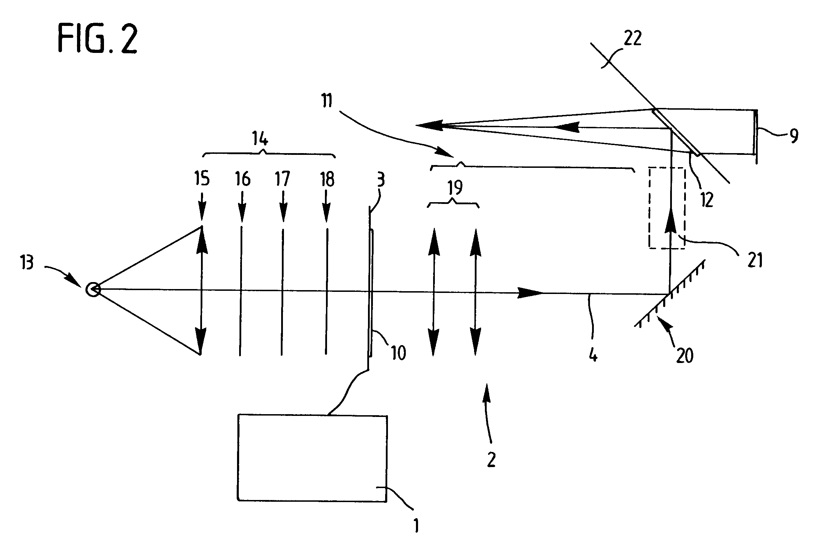

On décrira tout d'abord, en se reportant aux figures 1 et 2 et en suivant un axe optique 4, le système optique de visualisation 2 en référence à la figure 2.

Ce système est spécialement adapté, notamment pour répondre en fonction du cahier des charges :

– à des contraintes d'encombrement précises afin de permettre son intégration dans la cabine de conduite 5, par exemple dans son pupitre de conduite 6, tout en permettant de superposer dans le champ visuel 7 de l'agent de conduite 8 une image virtuelle 9 de l'objet 10 du support d'information 3 ;

– à des contraintes d'intensité lumineuse en fonction de la luminosité variable du milieu extérieur au véhicule ;

– à des contraintes géométriques définissant le type de visualisation choisie "tête haute", "moyenne", basse",

– à des contraintes chromatiques selon le type d'information.

Un mode de réalisation du système optique de visualisation 2 représenté à titre d'exemple non limitatif sur la figure 2, se compose essentiellement des moyens suivants se succédant dans le sens de l'axe optique 4 :

. le support d'informations 3,

. un système optique intermédiaire 11,

. une optique mélangeuse 12 réflective aux longueurs d'onde non utilisées.

L'optique mélangeuse 12 transparente aux longueurs d'onde non utilisées est un réseau holographique adapté sur par exemple un film photographique de haute résolution.

Ce film est rapporté sur la face arrière du pare-brise, solidarisé à celle-ci, par exemple par collage, à l'aide d'un ciment optique.

Bien entendu, une variante d'optique mélangeuse incorporée au pare-brise, dans l'épaisseur de celui-ci, convient également et, sous certains aspects, s'avère profitable.

On peut également envisager de placer l'optique mélangeuse 12 sur un support séparé amovible ou fixe placé dans le champ de vision du conducteur en amont, à proximité du pare-brise.

Le support d'informations 3 joue le rôle de surface objet, il peut être lumineux émissif par lui même (type à diodes électroluminescentes) ou non (support à cristaux liquides utilisé en transmittance) ; il est alors combiné à une source de lumière, comme c'est le cas dans le mode de réalisation représenté sur la figure 2.

Selon une variante de source lumineuse, celle-ci est une lampe 13, par exemple une lampe halogène de forte puissance munie d'un réflecteur déportant une partie des calories vers l'arrière du système. Comme la lumière émise par le filament de la lampe 13 diverge en cône, un bloc optique appelé collecteur-diffuseur 14 est placé entre la lampe 13 et le support d'informations 3 pour reporter l'énergie lumineuse de la lampe sur le support d'informations 3, par exemple un écran à cristaux liquides. Ce collecteur-diffuseur 14 est avantageusement composé, par exemple successivement et dans le sens des rayons lumineux, d'une lentille-condenseur 15, d'un verre dépoli 16 diffuseur uniformisant la puissance lumineuse, d'un filtre infra-rouge 17 pour s'affranchir des émissions de chaleur, d'un filtre couleur 18 pour améliorer le confort visuel de l'agent de conduite et pour adapter la source lumineuse à de possibles contraintes chromatiques limitant entre autres les réflexions vitreuses sur les optiques.

Dans le cas de cette variante de source lumineuse, il est nécessaire d'évacuer la puissance calorifique émise par la source au moyen d'une pluralité de ventilateurs non représentés, en complément éventuel du filtre infra rouge 17.

L'optique relais se poursuit sur l'axe optique 4 et en aval du support d'information dans le sens des rayons lumineux par un système à lentilles 19 formant l'image de l'information, puis par une pluralité de miroirs 20, par exemple trois disposés à 45° d'angle, pour renvoyer l'image de l'information dans le champ visuel d'un composant optionnel 21, dont la présence peut s'avérer nécessaire pour répondre aux contraintes géométriques d'intégration en cabine. Il pourra s'agir par exemple d'un objectif multilentilles choisi de telle sorte que l'aberration chromatique soit nulle pour les deux longueurs d'onde distinctes choisies, par exemple le bleu et le rouge.

L'ensemble du système optique 11 ci-dessus a pour fonction de guider l'image dans le champ objet de l'optique mélangeuse 12 et, si nécessaire, de mettre en forme l'image 9 de l'information.

L'optique mélangeuse 12, répondant entre autres aux contraintes énoncées, peut être soit une plaque dont la réflexion est due à la différence d'indice de réfraction, soit une plaque partiellement réfléchissante, soit un élément diffractif, par exemple un élément optique holographique, placé au niveau du pare-brise 22 du véhicule et dont la fonction première est de transmettre les informations avec une grande efficacité de diffraction dans le champ visuel des agents de conduite qui effectuent simultanément un contrôle visuel de l'ensemble des voies pour signaler au poste central d'éventuels obstacles sur les voies présentes dans leur champ de vision.

L'hologramme 12 forme en arrière du pare-brise 22 et sensiblement dans le champ visuel 7 du conducteur, une image virtuelle 9 de l'information reçue (voir figure 1).

L'implantation de l'hologramme 12 correspond à la position moyenne du conducteur, dont les variations sont comprises, toutes directions confondues, entre + ou - quatre degrés d'angle environ pour un type donné de cabine de conduite, ce que permet de garder fixe l'inclinaison prévue du miroir holographique plan pour les différentes hauteurs des yeux variables avec la taille du conducteur.

L'image virtuelle 9 est conforme à celle qui a été composée sur le support d'information 3 par le système électronique de gestion 1 de l'ensemble des données internes et externes. Ce système électronique de gestion 1 est constitué d'un microprocesseur avec un ensemble de cartes de gestion capables d'une part de gérer l'affichage graphique de la symbologie et d'autre part, de gérer les entrées et sorties du microprocesseur réalisant le traitement entre les informations reçues et émises.

On peut prévoir en outre de faire varier la puissance lumineuse de la source, quelle qu'en soit la variante, en fonction de la luminance extérieure à la cabine de conduite. De préférence, on diminuera l'intensité de la source avec la diminution de l'éclairage extérieur, pour ne pas éblouir l'agent de conduite (notamment la nuit et dans les tunnels), au moyen d'un petit ensemble électronique de régulation recevant des informations d'un capteur externe, par exemple d'une photodiode.

Le système électronique de gestion 1 reçoit divers types d'informations telles que :

– les données internes (par exemple : la vitesse réelle, ou la valeur de la luminosité...) ;

– les données extérieures issues d'un calculateur embarqué, en liaison avec l'extérieur par exemple par des bornes au niveau de la voie ou par différentes techniques d'émissions hertziennes.

Les informations transmises sont de type binaire ou rendues binaires et donnent toutes les indications nécessaires telles que par exemple :

– l'indication d'un signal latéral (par exemple la limite de la vitesse à 60 km/h),

– le conseil ou l'ordre envoyé par le régulateur qui contrôle le trafic,

– l'information sur l'existence d'un incident survenu sur la voie ou sur le véhicule,

– la vitesse contrôlée.

Ces informations internes et externes sont gérées par le système électronique de gestion et transformées à l'aide d'une symbologie en une information graphique se formant sur un des supports d'informations 3 décrits.

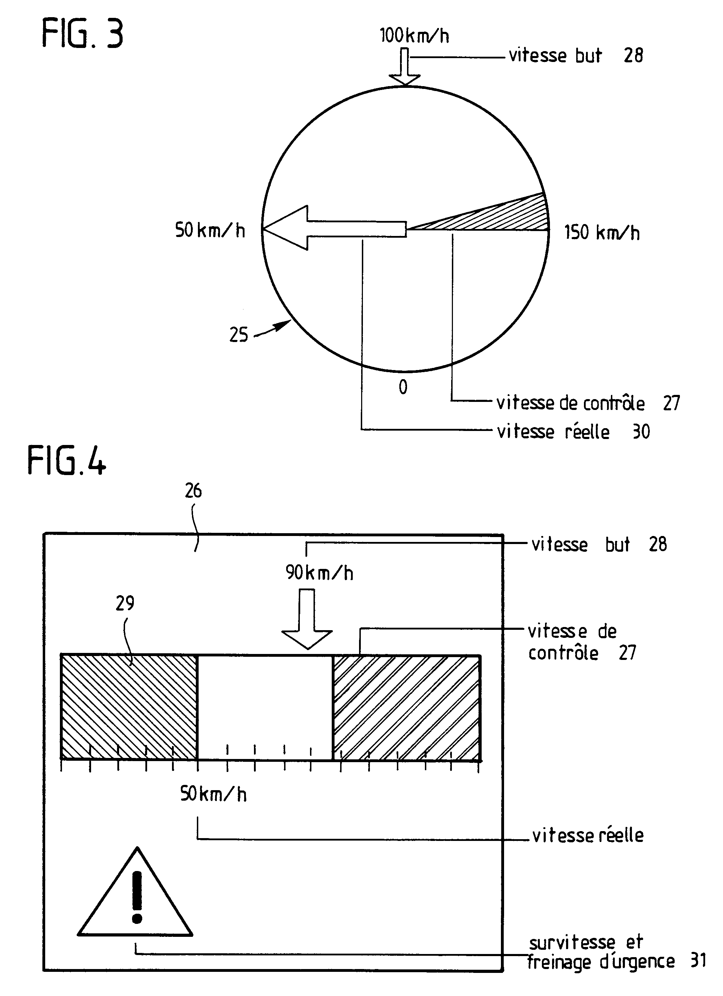

Plusieurs types de symbologies peuvent être choisis. A titre d'exemples, on citera la symbologie à cadre circulaire 25 (figure 3) ou celle à cadre rectangulaire 26 (figure 4).

Les informations affichées sur ces deux exemples sont au nombre non limitatif de cinq :

– la vitesse limite contrôlée par le calculateur de contrôle de vitesse qui est la vitesse maximale admissible, son dépassement entraînant le freinage d'urgence et son amplitude étant représentée par l'aire d'une zone pleine 27 dans le cadre ;

– la vitesse but qui est la vitesse vers laquelle tend la vitesse de contrôle et qui est représentée par une flèche 28 et par sa valeur numérique ;

– la vitesse instantanée qui est la vitesse réelle du train et dont l'amplitude est représentée par l'aire d'une zone hachurée 29 dans le cadre rectangulaire 26 ou par une flèche 30 dans le cadre circulaire 25 ;

– la présomption de survitesse qui s'affiche pour une vitesse réelle immédiatement voisine de la vitesse limite contrôlée représentée par un symbole 34 de forme triangulaire ;

– le freinage d'urgence qui est actionné en cas de survitesse (ici, le symbole triangulaire de danger est le seul affiché).

On peut envisager également une deuxième optique mélangeuse prévue en face d'un emplacement pour un passager ou un contrôleur de trafic ou un assistant à la conduite.

Pour ce faire, il suffit de placer en parallèle deux systèmes de transmission d'informations conformes à l'invention ou d'exploiter par deux optiques mélangeuses différentes le même support d'informations 3.

A cet effet, il convient de placer un coupleur optique approprié à la sortie de l'optique relais ou de réaliser deux voles distinctes présentant chacune un module correspondant au dernier étage de l'optique relais.

Les informations proviennent du système de gestion informatisé du trafic et de l'ordinateur de bord.

Il apparaît évident que d'autres informations utiles ou nécessaires à la conduite peuvent être visualisées dans le champ de vision du conducteur, telles que par exemple des alarmes : rupture de caténaire, obstacle sur la voie ou des informations météorologiques.

## Revendications

1. Procédé de visualisation d'informations pour les agents de conduite en cabine d'un véhicule ferroviaire ou convoi, caractérisé d'une part en ce que les informations sont visuelles et variables provenant à la fois de l'environnement du véhicule, du véhicule ou du convoi lui-même, et d'un poste de régulation central, et d'autre part en ce qu'il comporte :
   . une étape de transformation des informations reçues en information graphique,
   . une étape de formation de l'information graphique à une distance correspondant à la profondeur du champ désirée imposée par l'environnement.

2. Procédé selon la revendication précédente caractérisé en ce que les informations sont reçues sous forme binaire.

3. Procédé selon l'une des revendications précédentes caractérisé en ce qu'il est adaptable en fonction de la profondeur de champ désirée et/ou de la taille de l'agent de conduite.

4. Procédé selon l'une des revendications précédentes caractérisé en ce que l'information graphique est ergonomique.

5. Dispositif pour la réalisation du procédé selon l'une des revendications précédentes caractérisé en ce qu'il comporte la combinaison suivante des moyens intégrés en cabine :
   . un dispositif électronique de gestion (1) de l'ensemble des données internes et externes, d'une part pour la gestion graphique de la symbologie, d'autre part pour la gestion et le dialogue des entrées et sorties ;
   . un dispositif de transformation de ces informations en une présentation visuelle ;
   . un dispositif optique de mise en forme, de transmission, de réalisation dans le champ visuel principal d'un des agents de conduite, des informations visuelles selon une présentation ergonomique choisie.

6. Dispositif selon la revendication précédente caractérisé en ce que le dispositif optique se compose essentiellement de :
   . un bloc optique ;
   . un support d'informations (3) pour la formation d'une image jouant le rôle d'un objet ;
   . un système optique intermédiaire (11) à lentilles et/ou miroirs et/ou optiques diffractives pour guider l'image dans le champ objet d'une optique mélangeuse ;
   . une optique mélangeuse (12) pour la transmission de l'image avec une grande efficacité de diffraction dans le champ visuel de l'agent de conduite.

7. Dispositif selon la revendication 6 caractérisé en ce que le support d'information (3) est lumineux par lui-même.

8. Dispositif selon la revendication 6 caractérisé en ce que le support d'informations (3) est émissif ou non et alors combiné à une source de lumière.

9. Dispositif selon la revendication précédente caractérisé en ce que la source de lumière est une lampe (13) halogène munie d'un réflecteur .

10. Dispositif selon l'une des revendications 5 à 9 caractérisé en ce qu'un bloc optique comporte un collecteur-diffuseur (14) entre la source lumineuse et le support d'informations (3) pour collecter l'énergie lumineuse sur un écran à cristaux liquides, composé dans le sens des rayons lumineux d'une lentille condenseur (15), d'un verre dépoli diffuseur (16), d'un filtre infra-rouge (17), d'un filtre couleur (18).

11. Dispositif selon l'une de revendications 5 à 10 caractérisé en ce que le système optique intermédiaire (11) comporte au moins un ventilateur.

12. Dispositif selon l'une des revendications 5 à 11 caractérisé en ce que le système optique intermédiaire (11) comporte en aval et se succédant dans le sens des rayons lumineux du support d'informations 3 une optique par exemple à lentilles 19, une pluralité de miroirs 20 par exemple au nombre de trois disposés à 45° d'angle.

13. Dispositif selon la revendication précédente caractérisé en ce que le système optique intermédiaire (11) comporte en outre en aval des miroirs (20) un composant optionnel (21) qui est un objectif multilentilles choisi pour que l'aberration chromatique soit nulle pour deux longueurs d'onde distinctes.

14. Dispositif selon l'une des revendications 6 à 13 caractérisé en ce qu'il comporte un moyen de réglage de la puissance lumineuse de la source en fonction ou non de la luminance extérieure à la cabine de conduite.

15. Dispositif selon l'une des revendications 6 à 14 caractérisé en ce que l'optique mélangeuse (12) est une plaque dont la diffraction est due à la différence d'indice de réfraction.

16. Dispositif selon l'une des revendications 6 à 14 caractérisé en ce que l'optique mélangeuse (12) est une plaque partiellement réfléchissante.

17. Dispositif selon l'une des revendications 6 à 14 caractérisé en ce que l'optique mélangeuse (12) est un élément diffractif.

18. Dispositif selon la revendication précédente caractérisé en ce que l'élément diffractif est un élément optique holographique placé au niveau du pare-brise (26) du véhicule, formant à l'avant du pare-brise et dans le champ visuel (7) du conducteur une image virtuelle.

FIG.1

EP 0 499 558 A1

FIG.2

EP 0 499 558 A1

## FIG. 3

100km/h

vitesse but   28

50 km/h

150 km/h

25

0

vitesse de contrôle   27

vitesse réelle   30

## FIG.4

26

vitesse  but   28

90km/h

vitesse de
contrôle   27

29

50km/h

vitesse réelle

survitesse et
freinage d'urgence  31

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y<br>A | FR-A-2 638 687 (TANGUY)<br>* page 1, alinéa 1 *<br>* page 1, dernier alinéa *<br>--- | 1<br>4,6,8,16 | G02B27/00 |
| Y<br>A | US-A-4 439 755 (LARUSSA)<br>* abrégé *<br><br>* colonne 6, ligne 66 - ligne 68 *<br>* colonne 6, ligne 21 - ligne 42 *<br>--- | 1<br>2,5-8,<br>15,16 | |
| A | WO-A-8 809 942 (FLIGHT DYNAMICS)<br><br>* abrégé; figure 3 *<br>* page 5, ligne 3 - ligne 25 *<br>* page 16, ligne 8 - page 17, ligne 13 *<br>--- | 1,2,5,6,<br>8,14-18 | |
| A | EP-A-0 286 962 (HOLTRONIC)<br>* colonne 22, ligne 43 - colonne 23, ligne 4;<br>figures 14,15 *<br>--- | 3 | |
| A | PATENT ABSTRACTS OF JAPAN<br>vol. 10, no. 48 (P-431)(2105) ( NISSAN ) 1<br>Octobre 1985<br>& JP-A-60 192 912<br>* abrégé *<br>--- | 3 | DOMAINES TECHNIQUES RECHERCHES (Int. Cl.5)<br><br>G02B |
| A | EP-A-0 005 245 (HUGHES AIRCRAFT)<br>* abrégé *<br>* page 4, ligne 31 - page 5, ligne 9; figure 1 *<br>* page 7, ligne 30 - ligne 33 *<br>--- | 9,10 | |
| A | US-A-4 988 976 (LU)<br>* colonne 2, ligne 50 - ligne 54; figure 4 *<br>--- | 9 | |
| A | DE-A-1 115 657 (BRÄUER)<br>* revendication 1; figure 1 *<br>--- | 10 | |
| A | FR-A-2 209 119 (LAILLE)<br>* page 4, ligne 1 - ligne 4; figure 1 *<br>--- | 11 | |

Le présent rapport a été établi pour toutes les revendications

| Lieu de la recherche | Date d'achèvement de la recherche | Examinateur |
|---|---|---|
| LA HAYE | 12 MAI 1992 | SOULAIRE D.G. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

& : membre de la même famille, document correspondant

EPO FORM 1503 03.82 (P0402)

**Office européen des brevets**

# RAPPORT DE RECHERCHE EUROPEENNE

Numero de la demande

EP 92 44 0023
Page 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-4 740 780 (BROWN)<br>* abrégé *<br>* colonne 11, ligne 52 - colonne 12, ligne 7; figures 1,5 *<br>--- | 12 | |
| A | US-A-3 666 353 (SUSSMAN)<br>* colonne 3, ligne 15 - ligne 18; figure *<br>--- | 13 | |
| A | PATENT ABSTRACTS OF JAPAN<br>vol. 15, no. 24 (P-1156) ( ASAHI ) 2 Novembre 1990<br>& JP-A-2 269 303<br>* abrégé *<br>----- | 13 | |

**DOMAINES TECHNIQUES RECHERCHES (Int. Cl.5)**

Le présent rapport a été établi pour toutes les revendications

| Lieu de la recherche | Date d'achèvement de la recherche | Examinateur |
|---|---|---|
| LA HAYE | 12 MAI 1992 | SOULAIRE D.G. |